# EUROPÄISCHE PATENTSCHRIFT

(11) **EP 1 516 523 B1**
(45) Veröffentlichungstag und Bekanntmachung des Hinweises auf die Patenterteilung: **23.01.2008**
(21) Anmeldenummer: 04019885.5
(22) Anmeldetag: 21.08.2004
(51) Int. Cl.: A01D 82/02

(54) **Walzenmantel für Arbeitsaggregat in einer landwirtschaftlichen Maschine**
Roller sleeve for working unit in an agricultural machine.
Manchon de rouleau pour organe de travail dans une machine agricole

(30) Priorität: 17.09.2003 DE 10343253
(43) Veröffentlichungstag der Anmeldung: 23.03.2005
(73) Patentinhaber: CLAAS Selbstfahrende Erntemaschinen GmbH, 33428 Harsewinkel (DE)
(72) Erfinder: Deppe, Markus, 33739 Bielefeld (DE)

(56) Entgegenhaltungen:
- WO-A-94/13128
- DE-A- 4 130 606
- DE-B- 1 582 259

## Beschreibung

Die Erfindung betrifft die besondere Oberflächenstruktur eines Walzenmantels für Arbeitsaggregate in einer landwirtschaftlichen Maschine, insbesondere den Walzenmantel für Konditionierwalzen innerhalb eines selbstfahrenden Feldhäckslers.

Die Konditionierwalzen innerhalb eines Feldhäckslers haben die Funktion das den Feldhäcksler durchquerende Erntegut zu bearbeiten, indem die in dem Erntegut enthaltenen Körner angeschlagen und das übrige Erntegut durch die Walzen zerkleinert wird. Hierdurch sollen möglichst viele Körner, wie zum Beispiel Maiskömer, aufgeschlossen werden, was zu einer Beschleunigung des Gärungsprozesses und damit zu einer besseren Verdaubarkeit und Verwertbarkeit als Futtermittel für Vieh zur Folge hat

Bereits die DE 1 582 259 offenbart einen Preßzetter mit zwei gegensinnig zueinander umlaufbaren Walzen, dessen äußere Teilabschnitte einen gegenüber dem innenliegenden Teilabschnitt verringerten Durchmesser aufweisen, wobei der Walzenmantel schraubenlinienförmig verlaufende sich kreuzende Rillen aufweist. Nachteilig daran ist, dass eine solche Ausführung nicht für den Aufschluss von Erntgut wie Mais geeignet ist.

In der DE 197 03 486 A1 wird eine Nachzerkleinerungsvorrichtung, bestehend aus zwei parallelachsig zueinander verlaufenden rotierenden Walzen, offenbart, deren Ausführungsform in der Verwendung von Schneidscheiben oder Abschnitten unterschiedlichen Durchmessers besteht. Diese Schneidscheiben sollen derart auf der Walze angeordnet werden, dass die Schneidscheiben der einen Walze in die Schlitze der gegenüberliegenden Walze und umgekehrt eingreifen.

In einer weiteren Ausführungsform sind unterschiedliche Abschnitte derart auf der Walzenachse angeordnet, dass sich jeweils ein Abschnitt kleinen Durchmessers mit einem Abschnitt großen Durchmessers abwechselt. Insgesamt sollen durch die ineinandergreifende Anordnung der Schneidscheiben bzw. der Abschnitte der gegenüberliegenden Walze längere Erntegutstücke zerkleinert werden, ohne an den Konditionierwalzen vorbeiwandern zu können. Fertigungstechnisch werden die Walzen modulartig mit Vollscheiben bestückt, die durch Spannschrauben auf einer Welle zusammengefasst werden.

Aufgrund der Breite der Konditionierwalzen und dem angestrebten Ziel auch längere Erntegutstücke zu zerkleinern müssen die Abschnitte der Walzen in der DE 197 03 486 A1 entsprechend schmal sein. Um die gesamte Walzenbreite abzudecken müssen dementsprechend viele Abschnitte auf der Walze angeordnet werden. Hier wirken sich Fertigungstoleranzen besonders nachteilig aus. Aufgrund der hohen Stückzahl der Abschnitte addieren sich die Fertigungstoleranzen, so dass das Ende der Walze außer Richtung läuft. Zudem greifen die Verzahnungen der gegenüberliegenden Walzen nicht mehr ineinander, so dass sich die gegenüberliegenden Abschnitte bzw. Schneidscheiben bei schmaler Spalteinstellung kontaktieren und beschädigen. Die geometrische Aufteilung der Abschnitte führt außerdem zu einer starken Reibung und damit zu einem erhöhten Materialaufschluss und einem erhöhten Energiebedarf. Zudem muss die Vielzahl von Abschnitten mit hoher Genauigkeit gefertigt und einzeln auf die Walzenachse angepasst werden. Ferner ist auf jeder einzelnen Stirnseite der Abschnitte ein Zahnprofil einzuarbeiten, welches das Fördern und Anschlagen des Ernteguts erst ermöglicht.

Es ist daher Aufgabe der vorliegenden Erfindung, einen Walzenmantel zu schaffen, der eine umfassende Bearbeitung der Ernteguts ermöglich und die Nachteile des zitierten Standes der Technik ausschließt.

Diese Aufgabe wird erfindungsgemäß durch die kennzeichnenden Merkmale des Patentanspruchs 1 gelöst, wobei in den weiteren Patentansprüchen Merkmale aufgeführt sind, die diese Lösung in vorteilhafter Weise weiterentwickeln.

Indem der Walzenmantel von zumindest einer ersten Art von Nuten und wenigstens einer weiteren Art von Nuten durchsetzt ist, wobei die wenigstens zwei Arten von Nuten unterschiedliche Steigungen aufweisen, kann auf fertigungstechnisch einfache und kostengünstige Weise Walzenmanteloberflächen mit unterschiedlichen Ausgestaltungen eingefräst oder eingedreht werden. Daher können die allgemein bekannten Walzen verwendet werden, ohne dass ein Herstellungsmehiaufwand erforderlich ist. Um die unterschiedlichen Steigungen einzuarbeiten bedarf es lediglich eines geringfügigen Verstellens der z.B. Fräsorgane. Durch die unterschiedliche Steigung wird das Erntegut nicht nur bearbeitet, sondern die radiale Förderwirkung auf das Erntegut wird erhöht. Die Zähne greifen in das Erntegut und werfen das Erntegut in den hinteren Bereich des Förderschachts.

Das einander Durchsetzen der Nuten bewirkt eine besonders feine Oberflächenstruktur des Walzenmantels bestehend aus Profilblöcken und Profilrillen. Hierdurch kann effektiv auf die Bearbeitung des Ernteguts eingewirkt werden. Das Erntegut wird zerkleinert und die in dem Erntegut enthaltenen Körner gleichermaßen angeschlagen, ohne dass es zu einem vollständigen Zerreiben des Ernteguts und damit zu einer Minderung in der Verwertbarkeit des Ernteguts als Futtermittel kommt.

Die einfache Fertigungstechnik in Form von Fräsen und Drehen ermöglicht eine vielfältige Gestaltung des Walzenmantels. So können symmetrische und/oder asymmetrische Profilblöcke eingearbeitet werden. Dadurch wird eine gleichmäßige Ausgestaltung der Walzen erreicht, die einen geräuscharmen und guten Rundlauf gewährleisten.

Eine Zerkleinerung größerer oder längerer Erntegutstücke wird durch das Ineinandergreifen der Profilblöcke in die Profilrillen der gegenüberliegenden Walzen erreicht. Da der Walzenmantel über seiner gesamten Länge mit den Profilblöcken ausgestaltet werden kann, besteht für das Erntegut keine Möglichkeit an den Walzen vorbei zu wandern, so dass ein hoher Aufbearbeitungsgrad erreicht wird.

Durch die unterschiedliche Beschichtung der Profilblöcke und Profilrillen wird neben dem Schneiden bzw. Anschlagen des Ernteguts eine Selbstschärfung der ineinandergreifenden Profilblöcke und -rillen erzielt. Durch die Beschichtung wird einerseits die Abriebsfestigkeit und damit Lebensdauer der Walzen erhöht und andererseits eine gleichbleibende Bearbeitungsqualität ermöglicht.

Weitere vorteilhafte Ausgestaltungen sind Gegenstand weiterer Unteransprüche und werden nachfolgend anhand von Zeichnungen näher erläutert.

### Es zeigen

- Figur 1: die schematische Darstellung eines selbstfahrenden Feldhäckslers in Seitenansicht
- Figur 2: ein Teilausschnitt des erfindungsgemäßen Walzenmantels in Draufsicht
- Figur 2a: ein Konditionierwalzenpaar mit einem Teilausschnitt des in Figur 2 abgebildeten Walzenmantels
- Figur 3: ein Konditionierwalzenpaar mit erfindungsgemäßen Walzenmantel in Seitenansicht
- Figur 4: eine Detailansicht des in Figur 3 mit A bezeichneten Bereiches

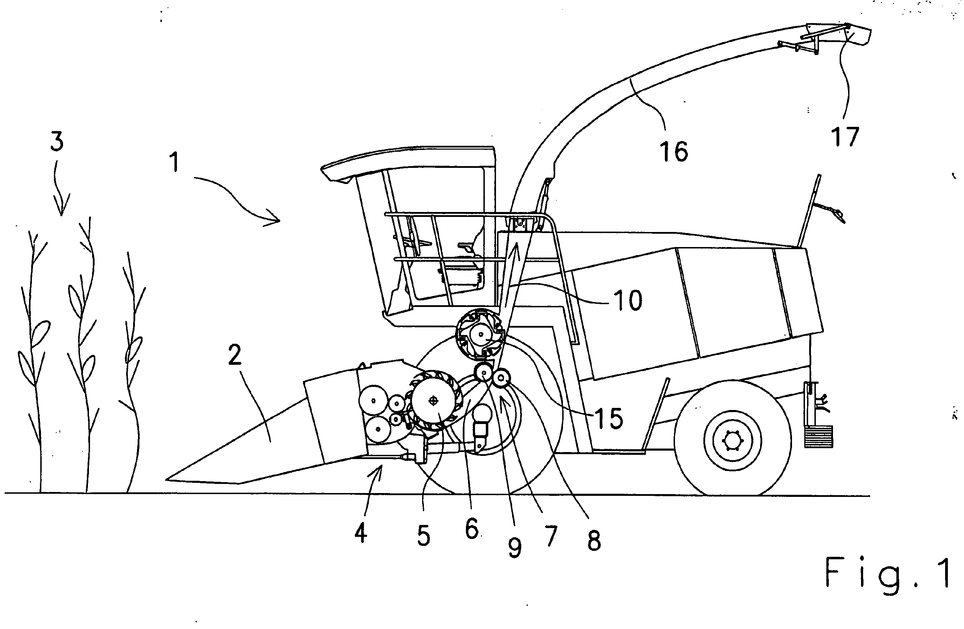

In der Figur 1 ist in schematischer Darstellung ein selbstfahrender Feldhäcksler 1 mit einer dazugehörigen Erntegutaufnahmeeinrichtung 2 in Seitenansicht dargestellt.
Die Erntegutaufnahmeeinrichtung 2 nimmt im Erntebetrieb des Feldhäckslers 1 Erntegut 3 auf und leitet es mittels nachfolgend angeordneter Förder- und Vorpresselemente 4 der Häckseltrommel 5 zu.
Das gehäckselte Erntegut 3 wird dann über einen Zwischenschacht 6 an eine Nachzerkleinerungseinrichtung 7 übergeben. Diese Nachzerkleinerungseinrichtung 7 besteht aus zwei Konditionierwalzen 8, 9. In Förderrichtung 10 des Ernteguts 3 ist der Nachbeschleuniger 15 der Nachzerkleinerungseinrichtung 7 nachgeordnet. Durch den Nachbeschleuniger 15 wird das Erntegut 3 derart beschleunigt, dass es durch den Auswurfkrümmer 16 über die Krümmerklappe 17 an ein nicht abgebildetes Transportfahrzeug übergeben werden kann.
Die gegensinnig angetriebenen Konditionierwalzen 8, 9 schlagen die Körner teilweise an, wodurch das Erntegut aufgeschlossen und der Gärungsprozess beschleunigt wird. Der Abstand der Konditionierwalzen 8, 9 zueinander und damit auch die Durchgangsspaltweite zwischen diesen beiden Walzen 8, 9 wird durch allgemein und nicht abgebildete Verstellvorrichtungen bestimmt. Ein breiter Durchgangsspalt 18 lässt eine dicke Erntegutmatte und somit viel Erntegut zwischen den Konditionierwalzen 8, 9 durchtreten, ein schmaler Durchgangsspalt 18 hingegen weniger Erntegut. Um eine optimale Bearbeitung des Ernteguts zu gewährleisten, müssen möglichst viele Körner angeschlagen und das übrige Erntegut - wie beispielsweise Lieschenblätter oder Erntegutstängel - zerkleinert werden. Demgemäss ist der Durchgangsspalt 18 kleiner als die in dem Erntegut enthaltenen Körner einzustellen. Eine zu kleine Einstellung würde allerdings zu einem vollständigen Zerquetschen des Ernteguts führen, was sich nachhaltig auf die Erntegutqualität und Verwertbarkeit auswirkt. Eine zu weite Einstellung des Durchgangsspalts 18 hingegen lässt ein Durchwandern größerer nicht bearbeiteter Erntegutbestandteile zu.

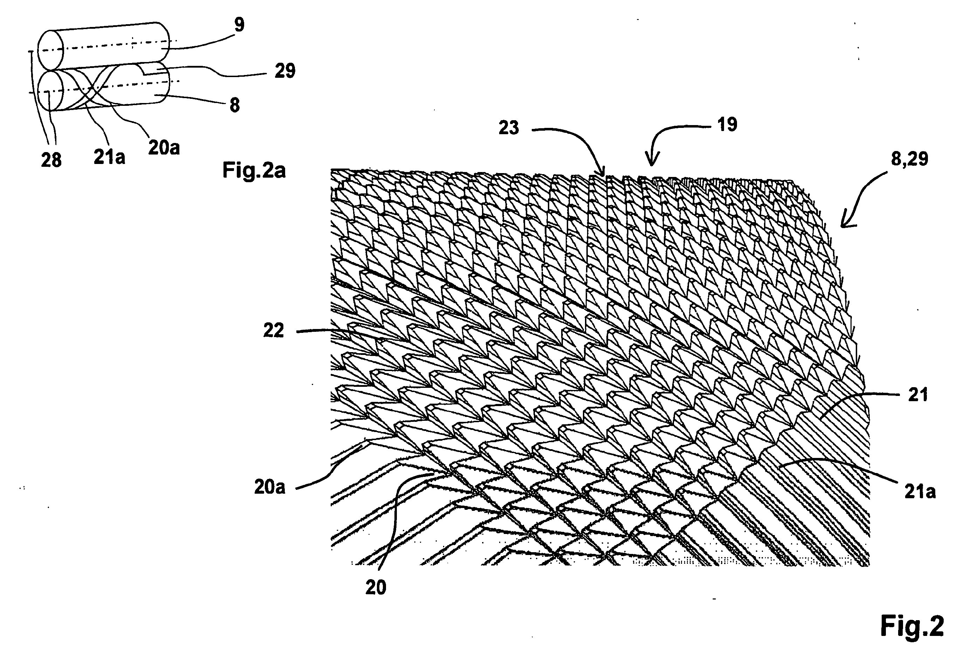

In der Figur 2 ist ein Teilausschnitt des erfindungsgemäßen Konditionierwalzenmantels 19 in Draufsicht abgebildet, aufgrund dessen Ausgestaltung ein Anschlagen der Körner und ein Zerkleinern des Ernteguts erfolgt, ohne dieses zu zermusen.
Als ein Ausführungsbeispiel sind zwei unterschiedliche Arten von Nuten 20, 21 abgebildet, die den Walzenmantel 19 durchsetzen. Um die radiale Förderwirkung des Walzenmantel 19 bzw. der Konditionierwalzen 8,9 zu erhöhen, weisen die Nuten 20, 21 unterschiedliche Steigungen auf. Die Zahnprofile 20a, 21 a greifen auf diese Weise in das zerkleinerte Erntegut und übergeben dieses an den nachgeordneten Nachbeschleuniger 15.
Die Nuten 20, 21 sind derart in den Walzenmantel 19 eingearbeitet, dass sie sich in ihrem weiteren Verlauf einander durchsetzen. Dies führt dazu, dass sich aus den ursprünglichen Zahnprofilen 20a, 21a einzelne Profilblöcke 22 bilden, die nunmehr die Oberflächenstruktur des Walzenmantels 19 darstellen. In dem zugrundeliegenden Ausführungsbeispiel sind sämtliche Profilblöcke 22 symmetrisch in den Walzenmantel 19 eingearbeitet. Neben dem geringen fertigungstechnischen Aufwand hat die symmetrische Anordnung der Profilblöcke 22 den Vorteil, dass das Erntegut gleichmäßig bearbeitet wird. Die beibehaltene Steigung der Profilblöcke 22 wirkt sich zudem positiv auf die Transportwirkung gegenüber dem Erntegut aus. So wird das Erntegut nicht nur wirkungsvoll bearbeitet, sondern zugleich beschleunigt und an das nachgeordnete Organ, beispielsweise dem Nachbeschleuniger 15, übergeben. Das Problem der Erntegutstauungen aufgrund zu hoher Erntegutmasseanteilen wird demgemäss reduziert. Anstelle eines symmetrischen Profils kann auch ein asymmetrisches Profil in den Walzenmantel 19 eingearbeitet und verwendet werden.

In der Figur 2a sind die gegensinnig angetriebenen Konditionierwalzen 8, 9 und deren Drehachsen 28 dargestellt. Der Teilausschnitt des erfindungsgemäßen Walzenmantels 19 der Figur 2 ist als Walzenausschnitt 29 an der unteren Konditionierwalze 8 in einem Teilbereich abgebildet. Sowohl der Walzenmantel 19 der oberen Konditionierwalze 9 als auch der Walzenmantel 19 der unteren Konditionierwalze 8 werden spiralförmig und koaxial um die dazugehörige Drehachse 28 herum von den Nuten 20 und 21 durchsetzt, so das sich das erfindungsgemäße in Figur 2 dargestellte Walzenmantelprofil auf dem gesamten Walzenmantel 19 der Konditionierwalzen 8, 9 erstreckt.
Durch die besondere spiralförmige und koaxiale Anordnung der Nuten 20, 21 auf den Walzenmantel 19 durchsetzen die Nuten 20, 21 einander und bilden die Profilrille 23. Aufgrund dieser Anordnung der Nuten 20, 21 zueinander besteht die Möglichkeit die Konditionierwalzen 8, 9 so stark einander zu nähern, dass der durch den Abstand der Konditionierwalzen 8, 9 gebildete Durchgangsspalt 18 derart gering ist, dass die einzelnen Profilblöcke 22 in die einzelnen Profilrillen 23 und/oder Nuten 20, 21 der sich gegenüberliegenden Konditionierwalzen 8, 9 greifen und damit das gesamte die Konditionierwalzen 8, 9 passierende Erntegut zerkleinern.

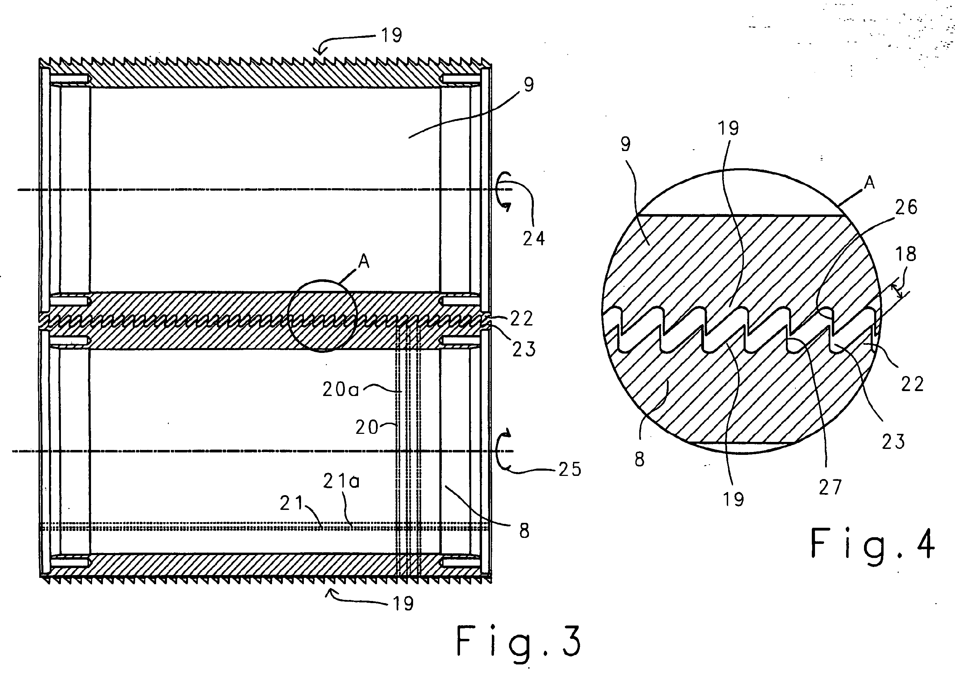

Die Figur 3 zeigt ein gegensinnig und in Pfeilrichtung 24, 25 angetriebenes Konditionierwalzenpaar 8, 9 dessen Walzenmantel 19, als weiteres Ausführungsbeispiel zu dem in Figur 2 abgebildeten Ausführungsbeispiel, von Nuten 20, 21 durchsetzt ist, die zueinander in einem 90 Grad Winkel und axial sowie in Gutflussrichtung zueinander verlaufen. Die axial verlaufenden Nuten 21 und Zahnprofile 21 a und die in Gutflußrichtung verlaufenden Nuten 20 und Zahnprofile 21 a sind strichliniert an der unteren Konditionierwalze 8 dargestellt Hieraus ist das rechtwinkelige einander Durchsetzen der Nuten 20 und 21 ersichtlich. In einem entsprechenden Verhältnis zueinander und leicht versetzt zur unteren Konditionierwalze 8 verlaufen die Nuten 20, 21 auf dem Walzenmantel 19 der oberen Konditionierwalze 9. Die Profilblöcke 22 auf dem Walzenmantel 19 der oberen Konditionierwalze 9 sind demgemäß so angeordnet, dass sie in die Profilrillen 23 der gegenüberliegenden unteren Konditionierwalze 8 eingreifen. Auf diese Weise wird eine Zerkleinerung des gesamten die Konditionierwalzen 8, 9 passierenden Ernteguts vorgenommen, ohne dass größere Erntegutbestandteile wie Lieschenblätter oder Erntegutstängel unbearbeitet bleiben.

Figur 4 ist eine Detailansicht des in Figur 3 mit A gekennzeichneten Bereichs. Die Profilblockinnenseite 26 der oberen Konditionierwalze 9 steht während des Eingreifens der Profilblockinnenseite 27 der unteren Konditionierwalze 8 gegenüber und bilden einen gleichmäßigen Durchgangsspalt 18. Die Verstellung des Emtegutdurchgangsspalts 18 wird durch allgemein bekannte und nicht dargestellte Verstellvorrichtungen vorgenommen. Die vorteilhafteste Stellung der Konditionierwalzen 8, 9 zueinander ist demgemäss das Eingreifen der Spitze der Profilblöcke 22 der oberen Konditionierwalze 9 in die Profilrillen 23 der gegenüberliegenden unteren Konditionierwalze 8, wobei der Durchgangsspalt 18 geringfügig kleiner sein sollte als die in dem Erntegut enthaltenen Körner. Durch die leichte Kontaktierung der Profilblockinnenseiten 26, 27 der gegenüberliegenden Profilblöcke 22 erfolgt eine Selbstschärfung des gesamten Profils, ohne dass es zu einer zu starken Verengung des durch die gegenüberliegenden Profilblöcke 22 gebildeten Durchgangsspalts 18 kommt.
Der eingestellte Durchgangsspalt 18 gewährleistet ein wirkungsvolles Anschlagen der Körner. Insgesamt wird durch diese besondere Anordnung der mit den erfindungsgemäßen Walzenmänteln 19 ausgestatteten Konditionierwalzen 8, 9 ein Zerreiben des Ernteguts zu einer breiartigen und damit die Verwertbarkeit als Futtermittel mindernde Masse verhindert. Dennoch ist die Reibung der Konditionierwalzen 8, 9 aneinander trotz des Profils gering und somit energetisch günstig.

Es liegt im Rahmen der Erfindung, dass die beschriebene Ausgestaltung des Walzenmantels 19 nicht nur an Konditionierwalzen 8, 9 in einem selbstfahrenden Feldhäcksler 1, sondern an beliebigen Arbeitsorganen oder Walzen in landwirtschaftlichen Maschinen einsetzbar ist, um die beschriebenen Effekte zu erzielen. Ebenso sind unterschiedliche Anordnungen der Nuten 20, 21 auf dem Walzenmantel 19 denkbar.

### Bezugszeichenliste:

- 1: Selbstfahrender Feldhäcksler
- 2: Erntegutaufnahmeeinrichtung
- 3: Erntegut
- 4: Förder- und Vorpresselemente
- 5: Häckseltrommel
- 6: Zwischenschacht
- 7: Nachtzerkleinerungseinrichtung
- 8: Konditionierwalze
- 9: Konditionierwalze
- 10: Förderrichtung
- 15: Nachbeschleuniger
- 16: Auswurfkrümmer
- 17: Krümmerklappe
- 18: Durchgangsspalt
- 19: Walzenmantel
- 20: Nut
- 20a: Zahnprofil
- 21: Nut
- 21 a: Zahnprofil
- 22: Profilblock
- 23: Profilrillen
- 24: Drehrichtung
- 25: Drehrichtung
- 26: Profilblockinnenseite
- 27: Profilblockinnenseite
- 28: Drehachsen
- 29: Walzenmantelausschnitt

## Patentansprüche

1. Walzenmantel für Arbeitsaggregate in einer landwirtschaftlichen Maschine, insbesondere Konditionierwalzen innerhalb eines selbstfahrenden Feldhäckslers, wobei
der Walzenmantel (19) von zumindest einer ersten Art von Nuten (20) und wenigstens einer weiteren Art von Nuten (21) durchsetzt ist, **dadurch gekennzeichnet, dass**die wenigstens zwei Arten von Nuten (20, 21) unterschiedliche Steigungen aufweisen.

2. Walzenmantel nach Anspruch 1,
**dadurch gekennzeichnet, dass**
sich die wenigstens zwei Arten von Nuten (20, 21) einander durchsetzen.

3. Walzenmantel nach Anspruch 2,
**dadurch gekennzeichnet, dass**
die sich einander durchsetzenden Nuten (20, 21) Profilblöcke (22) und Profilrillen (23) ausbilden.

4. Walzenmantel nach Anspruch 3,
**dadurch gekennzeichnet, dass**
die Profilblöcke (22) symmetrisch und/oder asymmetrisch angeordnet sind.

5. Walzenmantel nach Anspruch 3 oder 4,
**dadurch gekennzeichnet, dass**
die Profilblöcke (22) und die Profilrillen (23) zumindest zweier gegenüberliegender Konditionierwalzen (8, 9) ineinandergreifen.

6. Walzenmantel nach einem oder mehreren der vorhergehenden Ansprüche 3 bis 5,
**dadurch gekennzeichnet, dass**
die Profilblöcke (22) und die Profilrillen (23) unterschiedliche Beschichtungen aufweisen.

7. Walzenmantel nach einem oder mehreren der vorhergehenden Ansprüche 3 bis 6,
**dadurch gekennzeichnet, dass**
die ineinandergreifenden Profilblöcke (22) und Profilrillen (23) selbstschärfend angeordnet sind.

## Claims

1. A drum casing for working assemblies in an agricultural machine, in particular conditioning drums within a self-propelled forage harvester, wherein the drum casing (19) has at least a first kind of grooves (20) and at least one further kind of grooves (21) extending thereover, **characterised in that** the at least two kinds of grooves (20, 21) are of different pitches.

2. A drum casing according to claim 1 **characterised in that** the at least two kinds of grooves (20, 21) pass through each other.

3. A drum casing according to claim 2 **characterised in that** the grooves (20, 21) which pass through each other form profile blocks (22) and profile channels (23).

4. A drum casing according to claim 3 **characterised in that** the profile blocks (22) are arranged symmetrically and/or asymmetrically.

5. A drum casing according to claim 3 or claim 4 **characterised in that** the profile blocks (22) and the profile channels (23) of at least two mutually oppositely disposed conditioning rollers (8, 9) engage into each other.

6. A drum casing according to one or more of preceding claims 3 to 5 **characterised in that** the profile blocks (22) and the profile channels (23) have different coatings.

7. A drum casing according to one or more of preceding claims 3 to 6 **characterised in that** the interengaging profile blocks (22) and profile channels (23) are arranged to be self-sharpening.

## Revendications

1. Manchon de rouleau pour organe de travail dans une machine agricole, en particulier pour des rouleaux de conditionnement dans une ramasseuse - hacheuse, le manchon de rouleau (19) étant parcouru par au moins un type de rainures (20) et au moins un autre type de rainures (21), **caractérisé en ce que** lesdits au moins deux types de rainures (20, 21) présentent des inclinaisons différentes.

2. Manchon de rouleau selon la revendication 1, **caractérisé en ce que** lesdits au moins deux types de rainures (20, 21) se croisent.

3. Manchon de rouleau selon la revendication 2, **caractérisé en ce que** les rainures (20, 21) qui se croisent forment des blocs profilés (22) et des sillons profilés (23).

4. Manchon de rouleau selon la revendication 3, **caractérisé en ce que** les blocs profilés (22) sont disposés de manière symétrique et / ou asymétrique.

5. Manchon de rouleau selon la revendication 3 ou 4, **caractérisé en ce que** les blocs profilés (22) et les sillons profilés (23) d'au moins deux rouleaux de conditionnement (8, 9) opposés s'engagent les uns dans les autres.

6. Manchon de rouleau selon l'une des revendications précédentes 3 à 5, **caractérisé en ce que** les blocs profilés (22) et les sillons profilés (23) présentent des revêtements différents.

7. Manchon de rouleau selon l'une des revendications précédentes 3 à 6, **caractérisé en ce que** les blocs profilés (22) et les sillons profilés (23) sont disposés de manière à s'auto-aiguiser.
